# EUROPEAN PATENT APPLICATION

(11) **EP 2 178 147 A1**
(43) Date of publication of application: **21.04.2010**
(21) Application number: 08790368.8
(22) Date of filing: 05.08.2008
(51) Int. Cl.: H01M 8/04, B65D 83/00

(54) **FUEL SUPPLY DEVICE**

(30) Priority: 09.08.2007 JP 2007207590; 11.09.2007 JP 2007234940; 28.09.2007 JP 2007254021
(71) Applicant: Panasonic Corporation, Kadoma-shi Osaka 571-8501 (JP)
(72) Inventor: KOZU Katsumi c/o Panasonic Corporation IPROC, Osaka-shi Osaka 540-6207 (JP); HIRAKAWA Yasushi c/o Panasonic Corporation IPROC, Osaka-shi Osaka 540-6207 (JP)
(74) Representative: Schwabe - Sandmair - Marx
(86) International application number: PCT/JP2008/002104
(87) International publication number: WO 2009/019857

(57) **Abstract**

A fuel supply device includes a holder, a first connector, a second connector, and a connection pipe. The holder has a cartridge holder part on which a fuel cartridge is to be mounted. The first connector is connected to an apparatus including a power generation section. The second connector is provided at the cartridge holder part. The connection pipe connects the first connector with the second connector.

## Description

### TECHNICAL FIELD

The present invention relates to a fuel supply device for connecting an apparatus including a power generation section having a fuel cell and a fuel cartridge to each other so as to send fuel in the fuel cartridge to the power generation section side.

### BACKGROUND ART

Recently, with the rapid widespread of portable and cordless electronic apparatuses, as driving power sources for such electronic apparatuses, secondary batteries having a small size, light weight and large energy density have been increasingly demanded. Furthermore, much attention has been paid to fuel cells that can be continuously used for a long time with fuel supplied, rather than secondary batteries that need charging.

As small fuel cells to be mounted in small portable electronic apparatuses, fuel cells using a liquid fuel such as methanol, a methanol aqueous solution, and a formic acid aqueous solution have received much attention. However, such fuels are harmful to human body. Therefore, it is considered that such fuels are supplied in a state in which they are filled in a fuel cartridge and injected into electronic apparatus by directly connecting a connector of the fuel cartridge and a connector at the electronic apparatus side on which a fuel cell is mounted. Then, the shapes of these connectors are being developed in order to prevent fuel from leaking (for example, Patent Document 1).

Electronic apparatuses, for example, portable phones, in which a fuel cell is to be mounted have become smaller, and accordingly the sizes of connectors have also become smaller. However, when connectors are small, it is not easy for users having poor eyesight, for example, elderly persons to reliably connect these connectors. Furthermore, it is difficult for children and elderly persons to supply fuel to the electronic apparatus side by pressing the fuel cartridge by hand while connecting the electronic apparatus to the fuel cartridge. In addition, if an excessive force is applied to the fuel cartridge in a state in which the fuel cartridge is connected to the electronic apparatus, the fuel cartridge or the electronic apparatus may be damaged in the vicinity of the connectors thereof.
Patent Document 1: Japanese Patent Unexamined Publication No. 2007-128850

### SUMMARY OF THE INVENTION

The present invention solves the above-mentioned problems and provides a fuel supply device that facilitates sending fuel in a fuel cartridge to the power generation section side. The fuel supply device of the present invention includes a holder, a first connector to be connected to an apparatus, a second connector to be connected to a fuel cartridge, and a connection pipe. The holder includes a cartridge holder part on which a fuel cartridge is to be mounted. The second connector is provided at the cartridge holder part. The connection pipe connects the first connector with the second connector. With the fuel supply device having such a structure, a user can connect the second connector to the fuel cartridge only by fitting the fuel cartridge into the cartridge holder part. When the first connector is connected to the apparatus in this state, a fuel in the fuel cartridge can be sent to the power generation section. That is to say, an apparatus and a fuel cartridge can be connected easily. Furthermore, it becomes easy for children and elderly persons to supply fuel to the apparatus. In addition, since the fuel cartridge is not directly linked to the apparatus and the fuel cartridge is held by the holder, the possibility that the fuel cartridge or the apparatus are damaged is reduced.

### BRIEF DESCRIPTION OF THE DRAWINGS

Fig. 1 is a schematic sectional view showing a state in which an electronic apparatus and a fuel cartridge are connected to a fuel supply device in accordance with a first exemplary embodiment of the present invention.
Fig. 2 is a schematic sectional view showing a state in which an electronic apparatus and a fuel cartridge are connected to a fuel supply device in accordance with a second exemplary embodiment of the present invention.
Fig. 3 is a schematic sectional view showing a state in which an electronic apparatus and a fuel cartridge are connected to another fuel supply device in accordance with the second exemplary embodiment of the present invention.
Fig. 4 is a schematic sectional view showing a state in which an electronic apparatus and a fuel cartridge are connected to a fuel supply device in accordance with a third exemplary embodiment of the present invention.
Fig. 5A is a top plan view showing a first connector of the fuel supply device shown in Fig. 4.
Fig. 5B is a top plan view showing a second connector of the fuel supply device shown in Fig. 4.
Fig. 5C is a sectional view taken on line 5C-5C of the first connector shown in Fig. 5A.
Fig. 5D is a sectional view taken on line 5D-5D of the second connector shown in Fig. 5B.
Fig. 6 is an enlarged schematic sectional view of a second connector and vicinity thereof, of a fuel supply device in accordance with a fourth exemplary embodiment of the present invention.
Fig. 7 is a schematic sectional view illustrating a structure of a fuel supply device in accordance with a fifth exemplary embodiment of the present invention.
Fig. 8A is a view illustrating a state in which a normal (suitable) fuel cartridge is connected to the fuel supply device in accordance with the fifth exemplary embodiment of the present invention.
Fig. 8B is a view illustrating a state in which the fuel cartridge is pushed into the fuel supply device from the state shown in Fig. 8A.
Fig. 9A is a view illustrating a state in which an abnormal (unsuitable) fuel cartridge is to be connected to the fuel supply device in accordance with the fifth exemplary embodiment of the present invention.
Fig. 9B is a view illustrating a state in which the fuel cartridge is pushed into the fuel supply device from the state shown in Fig. 9A.
Fig. 10 is a schematic sectional view illustrating still another example of a structure of a fuel supply device in accordance with the fifth exemplary embodiment of the present invention.
Fig. 11A is a schematic top plan view showing a first connector of the fuel supply device shown in Fig. 10.
Fig. 11B is a sectional view taken on line 11B-11B of Fig. 11A.
Fig. 11C is a schematic top plan view showing a second connector of the fuel supply device shown in Fig. 10.
Fig. 11D is a sectional view taken on line 11D-11D of Fig. 11C.
Fig. 12 is a schematic sectional view illustrating a structure of a fuel supply device in accordance with a sixth exemplary embodiment of the present invention.
Fig. 13A is a schematic partial sectional view illustrating the determination of a connection state between a fuel cartridge and a second connector when a normal (suitable) fuel cartridge is used in the fuel supply device in accordance with the sixth exemplary embodiment of the present invention.
Fig. 13B is a schematic partial sectional view illustrating the determination of a connection state between a fuel cartridge and a second connector when an abnormal (unsuitable) fuel cartridge is used in the fuel supply device in accordance with the sixth exemplary embodiment of the present invention.
Fig. 14 is a schematic sectional view showing a structure of a fuel supply device in accordance with a seventh exemplary embodiment of the present invention.
Fig. 15 is a schematic sectional view showing a structure of a fuel supply device in accordance with an eighth exemplary embodiment of the present invention.
Fig. 16 is a schematic sectional view showing another example of a structure of a fuel supply device in accordance with the eighth exemplary embodiment of the present invention.
Fig. 17 is a schematic sectional view showing a state in which an electronic apparatus and a fuel cartridge are connected to a fuel supply device in accordance with a ninth exemplary embodiment of the present invention.
Fig. 18 is a sectional view showing structures of the second connector of the fuel supply apparatus and the connector part of the fuel cartridge shown in Fig. 17.
Fig. 19 is a schematic sectional view showing a state in which an electronic apparatus and a fuel cartridge are connected to a fuel supply device in accordance with a tenth exemplary embodiment of the present invention.
Fig. 20 is a schematic sectional view showing a state in which an electronic apparatus and a fuel cartridge are connected to another fuel supply device in accordance with the tenth exemplary embodiment of the present invention.
Fig. 21A is a schematic sectional view showing a state in which an electronic apparatus and a fuel cartridge are connected to still another fuel supply device in accordance with the tenth exemplary embodiment of the present invention.
Fig. 21B is a schematic sectional view showing a principal part of the fuel supply device shown in Fig. 21A.
Fig. 22 is a schematic sectional view showing a principal part of a holder of a fuel supply device in accordance with an eleventh exemplary embodiment of the present invention.
Fig. 23 is a schematic sectional view showing a state in which an electronic apparatus and a fuel cartridge are connected to a fuel supply device in accordance with a twelfth exemplary embodiment of the present invention.
Fig. 24 is a schematic sectional view showing a state in which an electronic apparatus and a fuel cartridge are connected to another fuel supply device in accordance with the twelfth exemplary embodiment of the present invention.
Fig. 25A is a schematic sectional view showing a state in which a fuel cartridge is connected to a fuel supply device in accordance with a thirteenth exemplary embodiment of the present invention.
Fig. 25B is a schematic sectional view showing a state in which a fuel cartridge is connected to another fuel supply device in accordance with the thirteenth exemplary embodiment of the present invention.

### REFERENCE MARKS IN THE DRAWINGS

1 electronic apparatus
1A, 1B connector part
2 power generation section
3, 3A, 3B, 3C fuel cartridge
3D, 3E fuel cartridge (second fuel cartridge)
4 holder
4A first holder
4B second holder
4M main body part
5, 5A, 5B first connector
6, 6A, 6B, 6C, 6D, 6E, 6F, 6G, 6H second connector
7 connection pipe
30, 30A, 30B, 30C, 30D connector part
31 nozzle part
32, 35, 83, 84 O-ring
33, 82 valve body
34, 85 spring
36, 86 reference plane
41, 41C apparatus holder part
42, 42A, 42B, 42C, 42D, 42E, 42F, 42G, 42H, 42J cartridge holder part
51 protrusion
52, 62 through hole
61 concave portion
63 recessed area
64 operation part
68, 68A spring
71, 72 holding member
90 distinguishing mark
92 opening
421, 421A, 421B, 421C supporting part
421D wall part
422 positioning part
422D opening
423 flat spring part
424 allowance

### DETAILED DESCRIPTION OF THE PREFERRED EMBODIMENT

Hereinafter, exemplary embodiments of the present invention are described with reference to drawings. Note here that the present invention is not limited to the contents mentioned below as long as it is based on the basic features described in the description. Furthermore, in each exemplary embodiment, the same reference numerals are given to the same configurations as those in the preceding exemplary embodiments and detailed description thereof may be omitted. Furthermore, configurations peculiar to the exemplary embodiments can be appropriately combined.

### (FIRST EXEMPLARY EMBODIMENT)

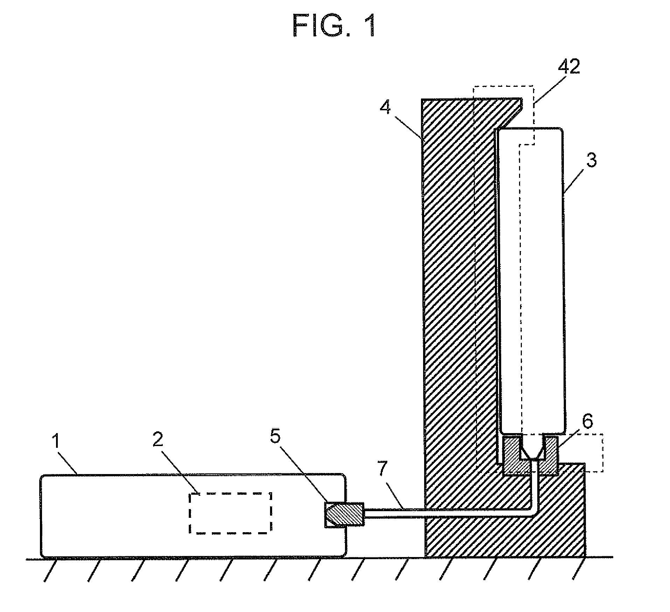

Fig. 1 is a schematic sectional view showing a state in which electronic apparatus 1 and fuel cartridge 3 are connected to a fuel supply device in accordance with a first exemplary embodiment of the present invention. Electronic apparatus 1 includes power generation section 2 formed of a fuel cell. Note here that detailed structures of the inside of electronic apparatus 1 and fuel cartridge 3 are omitted. The fuel supply device connects electronic apparatus 1 and fuel cartridge 3 so as to send fuel in fuel cartridge 3 to power generation section 2. This fuel supply device has holder 4, first connector 5, second connector 6, and connection pipe 7.

Holder 4 has cartridge holder part 42 on which fuel cartridge 3 is to be mounted. Second connector 6 to be connected to fuel cartridge 3 is provided at cartridge holder part 42. First connector 5 is to be connected to electric apparatus 1. Connection pipe 7 connects first connector 5 with second connector 6.

Although not shown, power generation section 2 has a fuel cell and a tank for storing fuel for the fuel cell. In Fig. 1, power generation section 2 is built in electronic apparatus 1. However, power generation section 2 may be provided as a separate body from electronic apparatus 1 and may be detachable to a main body of electronic apparatus 1. Furthermore, only any one of the above-mentioned tank and the fuel cell may be provided as a separate body from electronic apparatus 1. Therefore, electronic apparatus 1 may be an apparatus including at least a part of a power generation section formed of a fuel cell.

Herein, the fuel is intended to mean a liquid fuel such as methanol or an aqueous solution thereof, and formic acid. However, the fuel may be a gas fuel. Furthermore, fuel cartridge 3 may employ a method of sending fuel by pressurizing from outside, or a method of sending fuel by an internal pressure that has been set to be high.

First connector 5, second connector 6, holder 4, and connection pipe 7 are made of resin and/or metal. They are made of, for example, methanol-resistant polyethylene, polypropylene, and super engineering plastic such as polyetheretherketone, polyphenylene sulfide, and liquid crystal polymer, and resin materials such as polyethylene terephthalate, polybutylene terephthalate, and polyacetal. In particular, first connector 5, second connector 6, and connection pipe 7 are made of a material that is not easily reacted with, dissolved in and eluted in fuel. That is to say, they are preferably made of material in which residues, metal cation, and the like, are not eluted from a base material when the material is brought into contact with fuel.

It is preferable that cartridge holder part 42 has a shape in which fuel cartridge 3 is held in a position other than a position on which second connector 6 is provided, so that fuel cartridge 3 can be held. First connector 5 and second connector 6 have a mechanism for preventing fuel from leaking to the outside. However, the detail thereof is omitted herein.

With the fuel supply device having such a structure, a user can connect second connector 6 with fuel cartridge 3 only by fitting fuel cartridge 3 into cartridge holder part 42. When first connector 5 is connected to electronic apparatus 1 in this state, fuel in fuel cartridge 3 can be sent to power generation section 2 side. Therefore, electronic apparatus 1 can be connected to fuel cartridge 3 easily. Furthermore, since fuel cartridge 3 is not directly linked to electronic apparatus 1 and fuel cartridge 3 is held by holder 4, the possibility that fuel cartridge 3 and electronic apparatus 1 are damaged in each connector part or in the periphery thereof is reduced.

Note here that in Fig. 1, first connector 5 is disposed apart from holder 4 but it may be provided on the side surface at the opposite side to cartridge holder part 42 of holder 4. When first connector 5 is disposed in this location, electronic apparatus 1 can be joined to first connector 5 by sliding electronic apparatus 1 on the floor so as to allow holder 4 to face electronic apparatus 1.

It is preferable that first connector 5 and second connector 6 have shapes that can be joined (connected) to each other. When electronic apparatus 1 and fuel cartridge 3 have connector parts that can be directly joined to each other, electronic apparatus 1 and first connector 5, and fuel cartridge 3 and second connector 6 can be joined to each other, respectively. Therefore, first connector 5 and second connector 6 can be joined to each other. Thus, it is possible to prevent wrongly connecting another fuel cartridge that has connector parts with different types or shapes and that is not suitable for electronic apparatus 1.

In Fig. 1, first connector 5 has a convex shape and second connector 6 has a concave shape. However, first connector 5 may have a concave shape and second connector 6 may have a convex shape as long as they can be joined to electronic apparatus 1 and fuel cartridge 3, respectively.

In particular, it is preferable that the diameter of first connector 5 is smaller than the length of electronic apparatus 1 in the thickness direction. In this way, this configuration can exhibit the effect of facilitating the connection with respect to fuel cartridge 3 when a connector part is provided on the position whose width is the narrowest on the side surface or bottom surface of electronic apparatus 1.

### (SECOND EXEMPLARY EMBODIMENT)

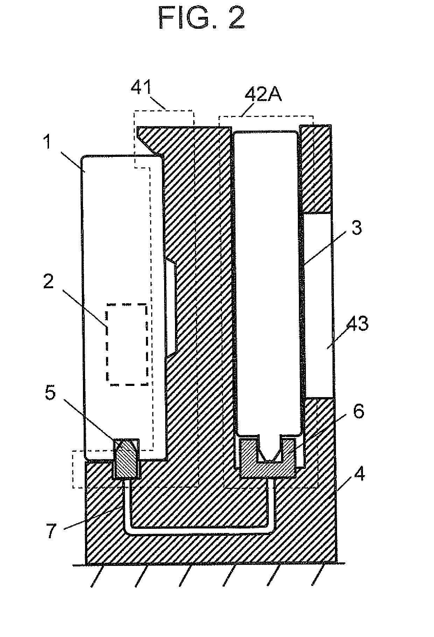

Fig. 2 is a schematic sectional view showing a state in which electronic apparatus 1 and fuel cartridge 3 are connected to a fuel supply device in accordance with a second exemplary embodiment of the present invention. This exemplary embodiment is different from the first exemplary embodiment in that holder 4 further includes apparatus holder part 41 capable of holding electric apparatus 1 and first connector 5 is provided at apparatus holder part 41. Furthermore, cartridge holder part 42A has a cylindrical structure in which fuel cartridge 3 is to be inserted from a top opening. Furthermore, opening 43 is provided on a side surface of cartridge holder part 42A. The other configurations are the same as those in the first exemplary embodiment.

In this way, by allowing holder 4 to be capable of holding also electric apparatus 1, electronic apparatus 1 and fuel cartridge 3 can be easily connected to each other only by setting both electronic apparatus 1 and fuel cartridge 3 on holder 4. In particular, only by inserting fuel cartridge 3 filled with fuel and having a large self weight from the top opening, fuel cartridge 3 can be easily held by cartridge holder part 42 and connected to second connector 6. Furthermore, since opening 43 is provided on the side surface of holder 4, fuel cartridge 3 can be pressed from the outside.

One type of fuel cartridge 3 employs a method of sending fuel inside by pressurizing from outside. In order to send fuel to the electronic apparatus 1 side by using this type of fuel cartridge 3, it is preferable that cartridge holder part 42 holds fuel cartridge 3 in a state in which fuel cartridge 3 is capable of being pressed from the outside.

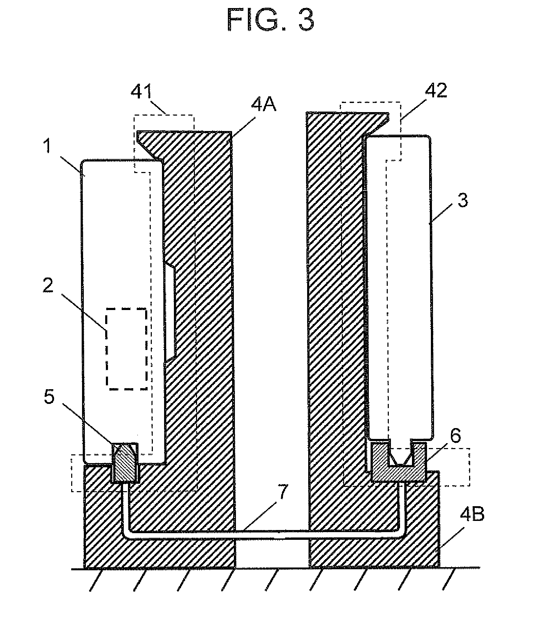

Fig. 3 is a schematic sectional view showing a state in which electronic apparatus 1 and fuel cartridge 3 are connected to another fuel supply device in accordance with the second exemplary embodiment of the present invention. The fuel supply device shown in Fig. 3 is different from the fuel supply device shown in Fig. 2 in that holder 4 is divided into first holder 4A and second holder 4B. Apparatus holder part 41 is provided on first holder 4A, and cartridge holder part 42 is provided on second holder 4B. Furthermore, cartridge holder part 42 is the same as shown in Fig. 1. Also when the thus divided first holder 4A and second holder 4B are used and electronic apparatus 1 and fuel cartridge 3 are mounted on first holder 4A and second holder 4B, respectively, the same effect as that in Fig. 2 can be obtained. Furthermore, when the side surface of fuel cartridge 3 is exposed in this way, fuel cartridge 3 can be pressed from the outside.

### (THIRD EXEMPLARY EMBODIMENT)

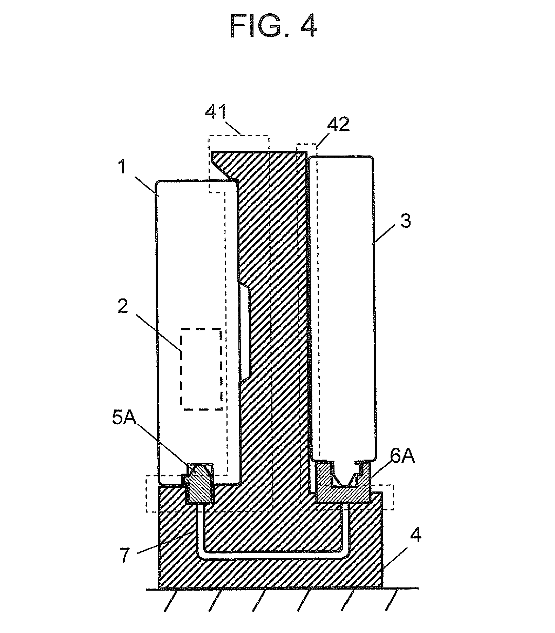

Fig. 4 is a schematic sectional view showing a state in which electronic apparatus 1 and fuel cartridge 3 are connected to a fuel supply device in accordance with a third exemplary embodiment of the present invention. This exemplary embodiment is different from Fig. 3 of the second exemplary embodiment in that first connector 5A and second connector 6A have a pair of mechanical keys having special shapes capable of being joined to each other and holder 4 is integrated.

It is preferable that a connector part of electronic apparatus 1 and a connector part of fuel cartridge 3 have a pair of mechanical keys having special shapes capable of being joined to each other. Thus, it is possible to prevent a fuel cartridge that is a different type and is not suitable for electronic apparatus 1 from being connected to electronic apparatus 1. In response to this, it is preferable that first connector 5A and second connector 6A form a pair of mechanical keys.

Herein, the type of fuel cartridge 3 includes kinds and concentrations of fuels, the presence of an internal pressure for sending fuel, and the like. When fuel that is not suitable for power generation section 2 of electronic apparatus 1 is used, the possibility that the performance of the fuel cell of power generation section 2 may be degraded is high. A configuration of this exemplary embodiment can prevent such a failure. Note here that this configuration may be applied to the first exemplary embodiment.

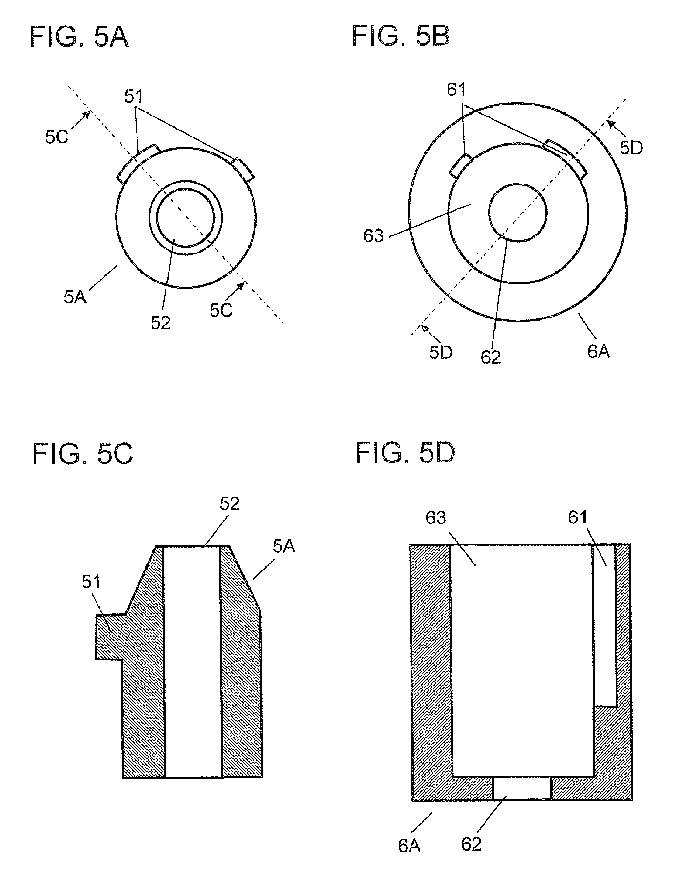

Figs. 5A to 5D show one example of the shapes of first connector 5A and second connector 6A. Fig. 5A is a top plan view of first connector 5A, Fig. 5B is a top plan view of second connector 6A, Fig. 5C is a sectional view taken on line 5C-5C of first connector 5A, and Fig. 5D is a sectional view taken on line 5D-5D of second connector 6A.

First connector 5A has through hole 52 through which fuel is allowed to pass in a center part, and two protrusions 51 on the external peripheral part. Meanwhile, in the center part of second connector 6A, recessed area 63 for accommodating a connector part of fuel cartridge 3 is provided, and through hole 62 through which fuel is allowed to pass is provided next to recessed area 63. Furthermore, next to the outside of recessed area 63, concave portions 61 are provided in respective positions corresponding to protrusions 51. Note here that both first connector 5A and second connector 6A have mechanisms for preventing fuel from leaking to the outside, but the detail thereof is omitted herein.

In this structure, by matching protrusions 51 to concave portions 61, first connector 5A and second connector 6A can be joined to each other. That is to say, first connector 5A and second connector 6A have a pair of mechanical keys having specific shapes capable of being joined to each other. Note here that the shapes of the mechanical keys are not limited to this.

It is preferable that second connector 6A is rotatable with respect to holder 4. Although mechanical keys of the connector part of fuel cartridge 3 and second connector 6A match to each other, if the rotation positions thereof do not match to each other, they cannot be joined to each other. Even in such a case, when second connector 6A is rotatable with respect to holder 4, second connector 6A can be rotated and joined to the connector part of fuel cartridge 3.

### (FOURTH EXEMPLARY EMBODIMENT)

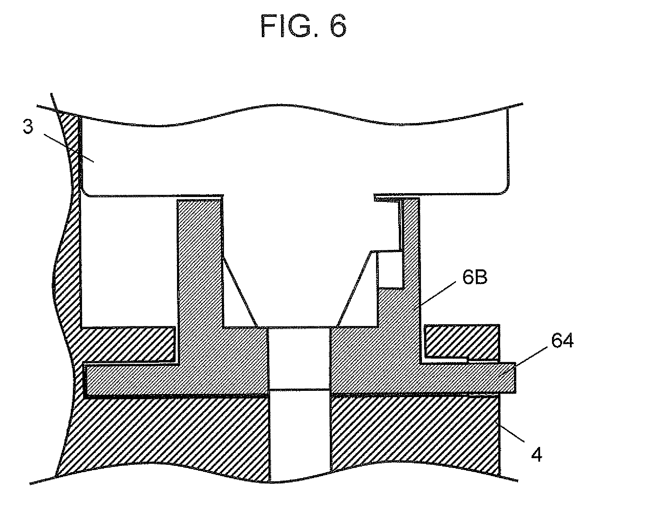

Fig. 6 is an enlarged schematic sectional view of second connector 6B and vicinity thereof in a fuel supply device in accordance with a fourth exemplary embodiment of the present invention. This exemplary embodiment is different from the third exemplary embodiment in that second connector 6B has operation part 64 which protrudes from holder 4 and for rotating second connector 6B.

As described in the third exemplary embodiment, although mechanical keys of the connector part of fuel cartridge 3 and second connector 6B match to each other, if the rotation positions thereof do not match to each other, they cannot be joined to each other. Even in such a case, when second connector 6B is rotatable with respect to holder 4, second connector 6B can be rotated and joined to the connector part of fuel cartridge 3. At this time, the use of operation part 64 facilitates the rotation of second connector 6B.

### (FIFTH EXEMPLARY EMBODIMENT)

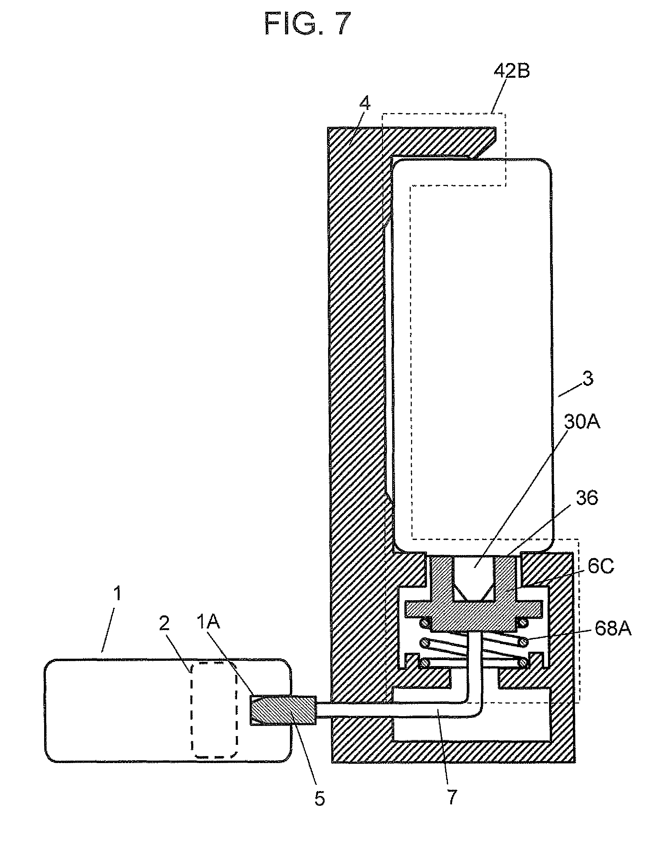

Fig. 7 is a schematic sectional view illustrating a structure of a fuel supply device in accordance with a fifth exemplary embodiment of the present invention. The fuel supply device of this exemplary embodiment is different from that of the first exemplary embodiment in the configuration of cartridge holder 42B.

The fuel supply device includes second connector 6C built in holder 4, spring 68A, for example, a coil spring as an elastic member, and connection pipe 7 for connecting second connector 6C with first connector 5. Second connector 6C is movably supported by spring 68A and built in holder 4. That is to say, cartridge holder part 42B includes second connector 6C and spring 68A. Furthermore, fuel cartridge 3 includes connector part 30A. By connecting connector part 30A and second connector 6C to each other, predetermined fuel is supplied to electronic apparatus 1. Electronic apparatus 1 includes power generation section 2 and connector part 1A to be connected to first connector 5.

When first connector 5 is connected to connector part 1A, and second connector 6C is connected to connector part 30A, fuel in fuel cartridge 3 is supplied to power generation section 2. At this time, fuel cartridge 3 may be a non-pressurizing type on which pressure is applied from outside so as to send out fuel, or may be a pressurizing type in which the internal pressure is set to be high and fuel is sent out with the internal pressure. For example, in the case of the non-pressurizing type, fuel can be supplied by pressing fuel cartridge 3 mounted on the fuel supply device. Note here that, as spring 68A, a disc spring may be used instead of a coil spring.

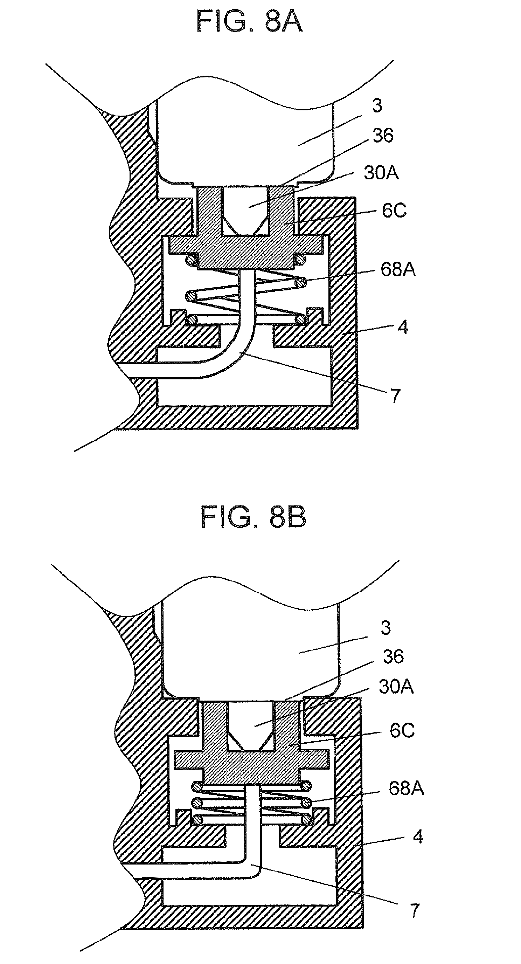

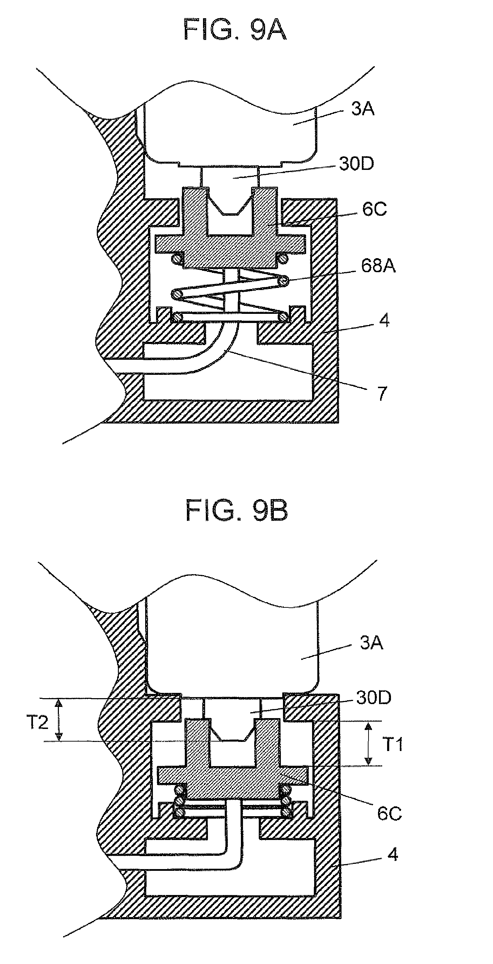

Hereinafter, an effect of second connector 6C, which is movably held, of a fuel supply device is described with reference to Figs. 8A, 8B, 9A and 9B. Figs. 8A and 8B are views illustrating a state in which normal (suitable) fuel cartridge 3 is connected to fuel supply device. Figs. 9A and 9B are views illustrating a state in which abnormal (unsuitable) fuel cartridge 3 is to be connected to fuel supply device. Herein, suitable fuel cartridge 3 means that the shape of connector part 30A coincides with the shape of second connector 6C. On the other hand, unsuitable fuel cartridge 3A means that the shape of connector part 30D does not coincide with the shape of second connector 6C.

In the case of suitable fuel cartridge 3, firstly, as shown in Fig. 8A, fuel cartridge 3 is inserted along holder 4 so that connector part 30A and second connector 6C are fitted with each other. At this time, second connector 6C moves downward by the spring property of spring 68A.

Then, as shown in Fig. 8B, when fuel cartridge 3 is brought into contact with holder 4 and supported and fixed, second connector 6C and connector part 30A are fitted with each other with a pressing force (repulsive force) of spring 68A, and fuel is supplied to connection pipe 7.

On the other hand, in the case of the unsuitable fuel cartridge 3A, as shown in Fig. 9A, the shape of connector part 30D does not coincide with the shape of second connector 6C. Therefore, when fuel cartridge 3A is to be connected in this state, an unexpected force may be applied to second connector part 6C or connector part 30D. Therefore, second connector 6C or connector 30D may be damaged, or second connector 6C or connector 30D may deformed due to forcible connection, which may lead to imperfect connection. In such a case, liquid leakage of fuel may occur.

However, as shown in Fig. 9B, even if second connector 6C is attempted to be connected to connector 30D forcibly, second connector 6C supported by spring 68A retracts downward, thus preventing damage or imperfect connection.

In this exemplary embodiment, second connector 6C is movably supported by spring 68A as an elastic member. Connector part 30A of fuel cartridge 3 is to be connected to second connector 6C. Consequently, the forcible connection due to an unexpected force and the like can be avoided, and thus damage, liquid leakage, and the like, can be prevented. Furthermore, since a user is not required to directly connect fuel connector part 30A of cartridge 3 with connector part 1A of electronic apparatus 1, damage at the time of connection or at the time of filling fuel can be prevented.

According to this exemplary embodiment, electronic apparatus 1 and fuel cartridge 3 are easily connected to each other, and even children and elderly persons can supply fuel to electronic apparatus 3 safely and reliably. Furthermore, since connector part 30A of fuel cartridge 3 is connected to movable second connector 6C, the possibility of damage can be remarkably reduced.

Furthermore, second connector 6C can be inclined freely. Therefore, it is not necessary to connect second connector 6C to fuel cartridge 3 in a state in which second connector 6C faces fuel cartridge 3 in a restricted state. Therefore, fitting at the initial time of connection can be carried out easily, and a highly convenient fuel supply device can be achieved.

Note here that as shown in Fig. 9B, it is preferable that movable range T1 of second connector 6C is longer than at least height T2 of connector part 30D of fuel cartridge 3A that is supported by holder 4. Thus, connection to unsuitable fuel cartridge 3A can be avoided and connector part 30D can be prevented from being damaged. However, as described in the following exemplary embodiments, when the shape of the connector part is equal to the shape of the second connector, and when, for example, only the shape and dimension of the mechanical keys are different, it is acceptable that movable range T1 may be longer than the longest mechanical key.

Note here that in this exemplary embodiment, the shape of connector part 30A of fuel cartridge 3 and the shape of connector part 1B of electronic apparatus 1 are different from each other in Fig. 7. However, the shapes are not particularly limited to this example. For example, it is preferable that connector part 30A and connector part 1B have the shapes capable of being joined to each other. In other words, connector part 30A and connector part 1B are capable of being joined to each other. Thus, it is possible to prevent other fuel cartridges, which has connector parts with different types and shapes and which is not suitable for electronic apparatus 1, from being connected wrongly.

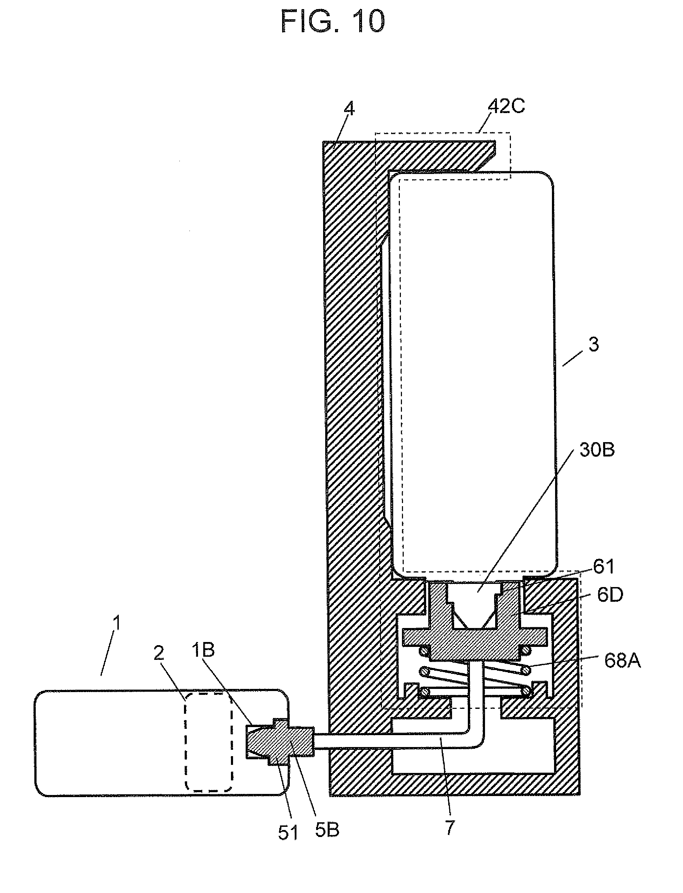

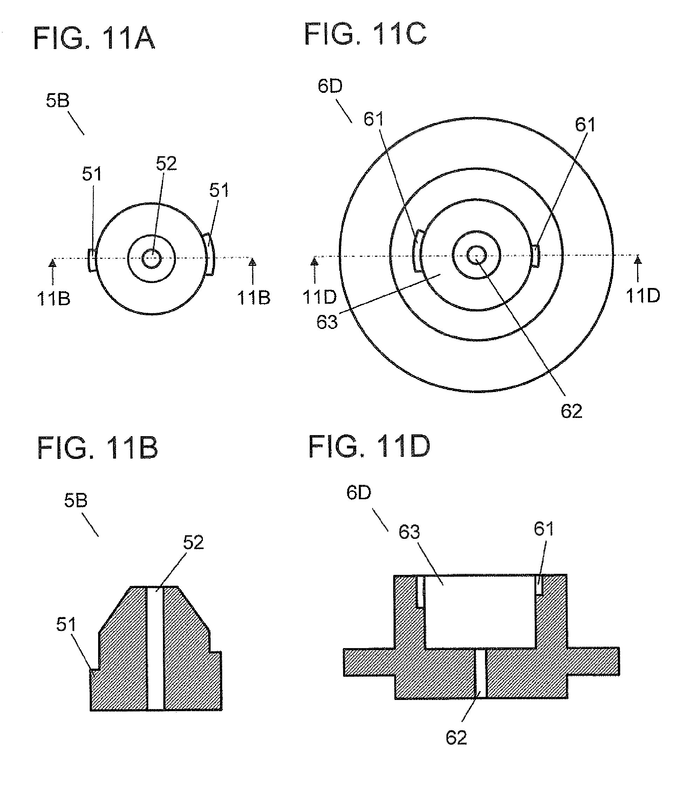

Next, still another example of a fuel supply device in accordance with this exemplary embodiment is described. Fig. 10 is a schematic sectional view illustrating still another example of a structure of a fuel supply device in accordance with the fifth exemplary embodiment. Fig. 11A is a schematic top plan view showing first connector 5B in Fig. 10, Fig. 11B is a sectional view taken on line 11B-11B of Fig. 11A, Fig. 11C is a schematic top plan view showing second connector 6D in Fig. 10, and Fig. 11D is a sectional view taken on line 11D-11D of Fig. 11C. Note here that in Figs. 11A to 11D, first connector 5B and second connector 6D are described as an example. However, the same is true to connector part 30B of fuel cartridge 3 and connector part 1B of electronic apparatus 1.

In this configuration, connector part 30B and second connector 6D form a pair of mechanical keys capable of being joined to each other. Cartridge holder part 42C includes second connector 6D and spring 68A. Furthermore, connector part 1B of electronic apparatus 1 and first connector 5B form a pair of mechanical keys having special shapes capable of being joined to each other. These points are different from the configuration shown in Fig. 7. That is to say, protrusions provided on connector part 30B and concave portions 61 provided on second connector 6D form a pair of mechanical keys. Similarly, the concave portions provided on connector part 1B and protrusions 51 provided on first connector 5B form a pair of mechanical keys.

Note here that it is preferable that connector part 1B and connector part 30B have a pair of mechanical keys having special shapes capable of being joined to each other. Thus, it is possible to prevent a fuel cartridge, which is not suitable for electronic apparatus 1 and, for example, has a different type, from being connected to electronic apparatus 1. Herein, the type of fuel cartridge 3 includes kinds and concentrations of fuels, the presence of an internal pressure for sending fuel, and the like.

Furthermore, it is preferable that protrusion (mechanical key) of connector part 30B is formed of a material and has a shape having rigidity that is not deformed or damaged by pressing force of spring 68A for supporting and pressing connector 6D. Thus, even if a fuel cartridge having a different mechanical key is attempted to be connected, damage of the mechanical key can be prevented in advance and connection with different fuel cartridge can be avoided. Furthermore, it is possible to reliably prevent degradation or failure of the performance of a fuel cell of power generation section 2, which may occur when fuel that is not suitable for power generation section 2 is used.

Hereinafter, an example of a mechanical key is described in detail with reference to Figs. 11A to 11D. As shown in Figs. 11A and 11B, first connector 5B has through hole 52 through which fuel is allowed to pass in a center thereof, and two protrusions 51 on the external peripheral part. Furthermore, as shown in Figs. 11C and 11D, second connector 6D has recessed area 63 for accommodating connector part 30B in the center thereof, and through hole 62 through which a fuel is allowed to pass next to recessed area 63. Furthermore, next to the outside of recessed area 63, concave portions 61 are provided in respective positions corresponding to protrusions 51. By fitting the protrusions of connector part 30B and concave portions 61 with each other so as to insert the protrusion of connector part 30B into concave portions 61, connector part 30B and second connector 6D are capable of being joined to each other. That is to say, the protrusion of connector part 30A and concave portion 61 of second connector 6 form a pair of mechanical keys having special shapes capable of being joined to each other. Note here that the shape of the mechanical key is not limited to this example and any shapes may be taken as long as they are a pair of shapes capable of being jointed to each other.

### (SIXTH EXEMPLARY EMBODIMENT)

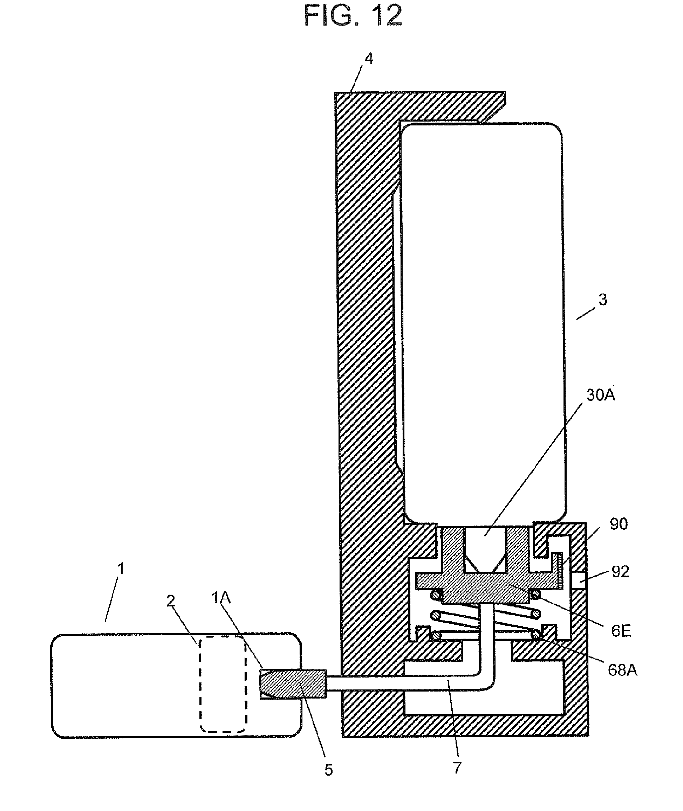

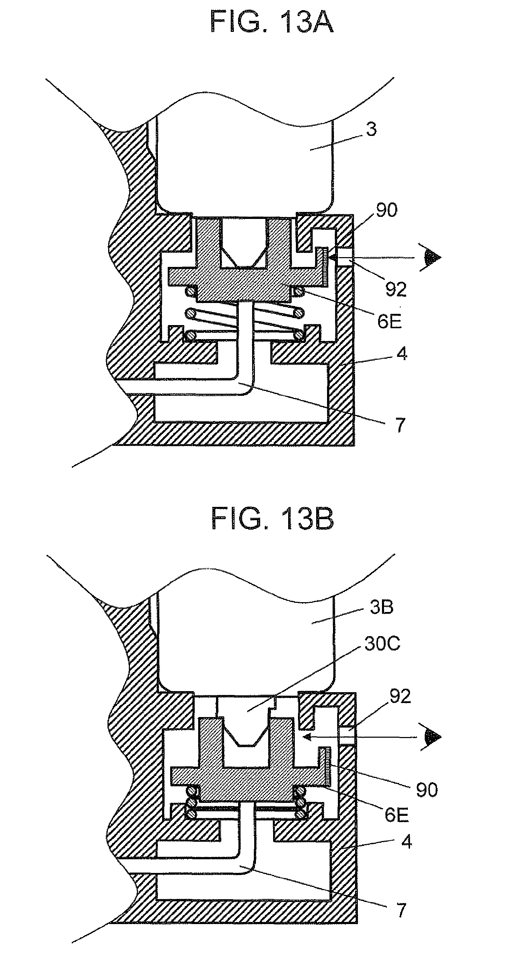

Fig. 12 is a schematic sectional view illustrating a structure of a fuel supply device in accordance with a sixth exemplary embodiment of the present invention. Figs. 13A and 13B are schematic partial sectional views illustrating a structure of the fuel supply device shown in Fig. 12 in detail. The fuel supply device in accordance with this exemplary embodiment is different from that in the fifth exemplary embodiment in that distinguishing mark 90 is provided on second connector 6E and opening part 92 is provided in a position of holder 4 facing distinguishing mark 90.

That is to say, second connector 6E is movably supported by spring 68A. Second connector 6E is provided with distinguishing mark 90 indicated by, for example, colors. In this way, cartridge holder part 42D has second connector 6E and spring 68A. Furthermore, holder 4 has opening part 92 in a position facing distinguishing mark 90 so that distinguishing mark 90 can be visually observed from the outside. Therefore, a user can visually observe distinguishing mark 90 through opening part 92 and can determine the state of the connection between fuel cartridge 3 and second connector 6E.

Hereinafter, a method of determining the connection state between fuel cartridge 3 and second connector 6 is described with reference to Figs. 13A and 13B. Fig. 13A is a schematic partial sectional view illustrating determination of a connection state between fuel cartridge 3 and second connector 6E when suitable fuel cartridge 3 is used. Fig. 13B is a schematic partial sectional view illustrating determination of a connection state between fuel cartridge 3B and second connector 6E when unsuitable fuel cartridge 3B is used.

As shown in Fig. 13A, when fuel cartridge 3 and second connector 6E are normally connected to each other, for example, red distinguishing mark 90 can be visually observed through opening part 92 of holder 4. Therefore, a user can determine that fuel cartridge 3 and second connector 6E are normally connected to each other.

On the other hand, as shown in Fig. 13B, when fuel cartridge 3B and second connector 6E are not normally connected to each other, for example, the shape of connector part 30C of fuel cartridge 3B and the shape of second connector 6E do not coincide with each other. Therefore, second connector 6E largely retracts in holder 4. At this time, due to the retracting of second connector 6E, distinguishing mark 90 cannot be visually observed through opening part 92 of holder 4. Thus, user can easily recognize that fuel cartridge 3B and second connector 6E are not normally connected to each other.

According to this exemplary embodiment, connection of a different fuel cartridge can be prevented. Furthermore, a user can determine the case that the fuel cartridge is not properly connected even when a suitable fuel cartridge is used.

Note here that in the above mentioned example, distinguishing mark 90 can be recognized through opening part 92 of holder 4 in the case of normal connection is described. However, the example is not necessarily limited to this. For example, a configuration in which a distinguishing mark divided by two colors, red and blue, is provided on second connector 6E, and a blue distinguishing mark can be visually observed through opening part 92 in the case of normal connection, and a red distinguishing mark can be visually observed from opening part 92 in the case of not-normal connection may be employed. Thus, determination can be carried out more easily.

### (SEVENTH EXEMPLARY EMBODIMENT)

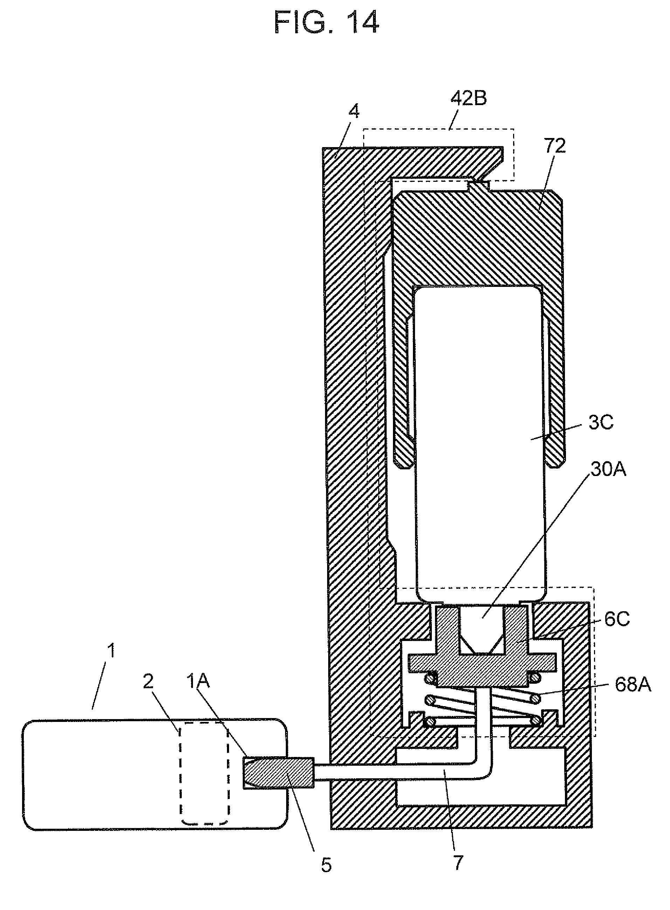

Fig. 14 is a schematic sectional view showing a structure of a fuel supply device in accordance with a seventh exemplary embodiment of the present invention. The fuel supply device in this exemplary embodiment is different from that of the fifth exemplary embodiment in that holding member 72 is provided so that fuel cartridge 3C having different external shapes can be installed.

The size of cartridge holder part 42B in holder 4 is fixed. Therefore, fuel cartridge 3C having different shapes and sizes from those of cartridge holder part 42B cannot be used. For example, fuel cartridge 3C having a prism shape with a short main body cannot be used.

Then, as shown in Fig. 14, it is preferable that holding member 72 is provided so that fuel cartridge 3C having different shapes can be installed in substantially the same state as it is installed on cartridge holder part 42B. Holding member 72 can dispose at least connector part 30A in a position corresponding to second connector 6. At this time, the allowable dimensional tolerance of holding member 72 and fuel cartridge 3C is further expanded. However, second connector 6C movably supported by spring 68A can absorb such tolerance. Therefore, convenience can be further improved.

As mentioned above, holding member 72 corresponds to second fuel cartridge 3C having different external shapes from those of fuel cartridge 3 and is detachable with respect to fuel cartridge 3C and cartridge holder part 42B. Fuel cartridge 3C on which holding member 72 is attached can be installed on cartridge holder part 42B.

This exemplary embodiment can be efficiently applied to a cylindrical-shaped or rectangular-shaped fuel cartridge in which the shape of connector part 30A is the same and the external shape of the main body is different.

### (EIGHTH EXEMPLARY EMBODIMENT)

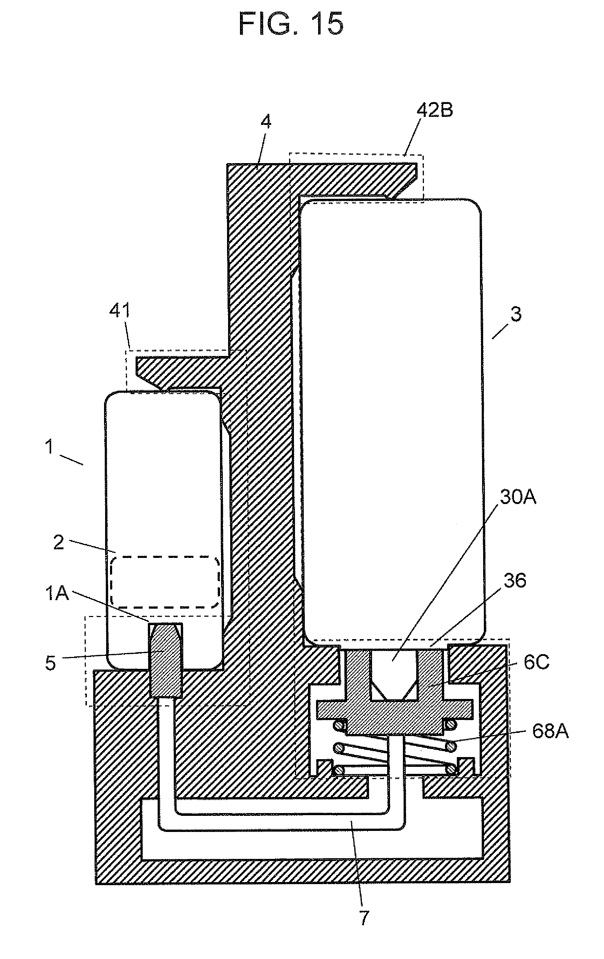

Fig. 15 is a schematic sectional view showing a structure of a fuel supply device in accordance with an eighth exemplary embodiment of the present invention. In this fuel supply device, holder 4 has cartridge holder part 42B and apparatus holder part 41. Second connector 6C and spring 68A are built in cartridge holder part 42B. First connector 5 is set in apparatus holder part 41. First connector 5 and second connector 6C are connected to each other with connecting pipe 7.

In this configuration, cartridge holder part 42B for holding fuel cartridge 3 and apparatus holder part 41 for holding electronic apparatus 1 are integrated with each other. Therefore, a user can attach fuel cartridge 3 and electronic apparatus 1 to the fuel supply device easily.

Furthermore, miniaturized connector part 1A and first connector 5 can be connected to each other by, for example, sliding electronic apparatus 1 by apparatus holder part 41 having substantially the same shape as that of electronic apparatus 1. Therefore, it is possible to effectively prevent damage of first connector 5 due to unexpected pressure or deformation at the time of connection.

Note here that a fuel supply device in which cartridge holder part 42B and apparatus holder part 41 are integrated with each other is described as an example. However, a fuel supply device is not necessarily limited to this example, and cartridge holder part 42B and apparatus holder part 41 may be separated from each other.

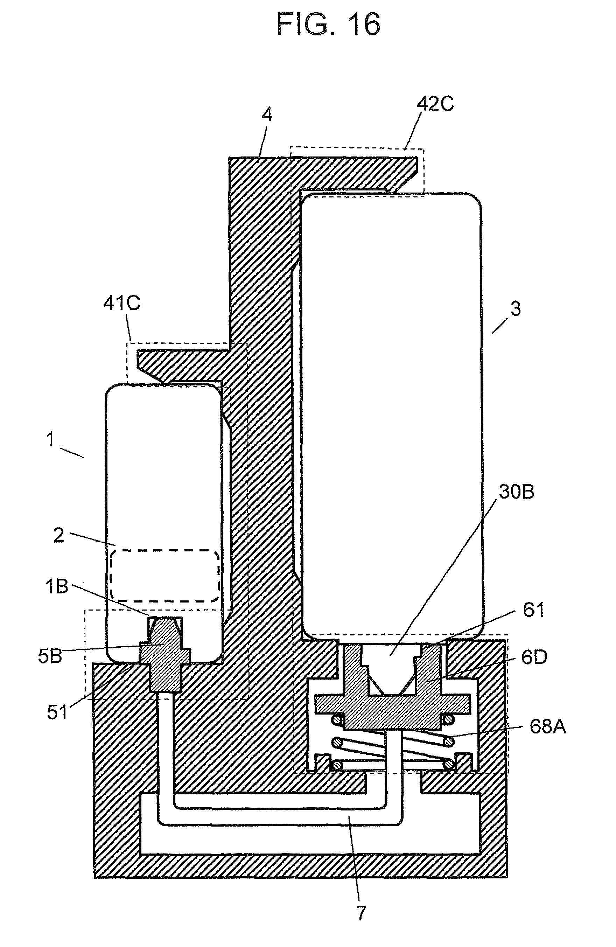

Next, another example of a fuel supply device in accordance with this exemplary embodiment is described with reference to Fig. 16. Fig. 16 is a schematic sectional view showing another example of a structure of a fuel supply device in accordance with the eighth exemplary embodiment of the present invention.

In this configuration, connector part 30B of fuel cartridge 3 and second connector 6D form a pair of mechanical keys having special shapes capable of being joined to each other. That is to say, cartridge holder part 42C has second connector 6D and spring 68A.

Furthermore, connector part 1B of electronic apparatus 1 and first connector 5B form a pair of mechanical keys having special shapes capable of being joined to each other. That is to say, apparatus holder part 41C has first connector 5B. In these points, this exemplary embodiment is different from Fig. 15. Note here that it is preferable that connector part 1B and connector part 30B form a pair of mechanical keys having special shapes capable of being joined to each other. That is to say, the fuel supply device shown in Fig. 16 has a configuration in which the configuration shown in Fig. 15 is combined with the configuration shown in Fig. 10.

Thus, it is possible to prevent a fuel cartridge that is not suitable for electronic apparatus 1 and, for example, has a different type from being connected to electronic apparatus 1. Herein, the type of fuel cartridge 3 includes kinds and concentrations of fuels, the presence of an internal pressure for sending fuel, and the like.

Here, it is preferable that each protrusion of connector part 30B of fuel cartridge 3 is formed of a material having rigidity which is not deformed or damaged by a pressing force of spring 68A for supporting and pressing second connector 6D. Thus, even if a fuel cartridge having a different mechanical key is attempted to be connected, damage of the mechanical key can be prevented in advance and connection with a different fuel cartridge can be avoided. Furthermore, the damage of the fuel cartridge can be prevented.

### (NINTH EXEMPLARY EMBODIMENT)

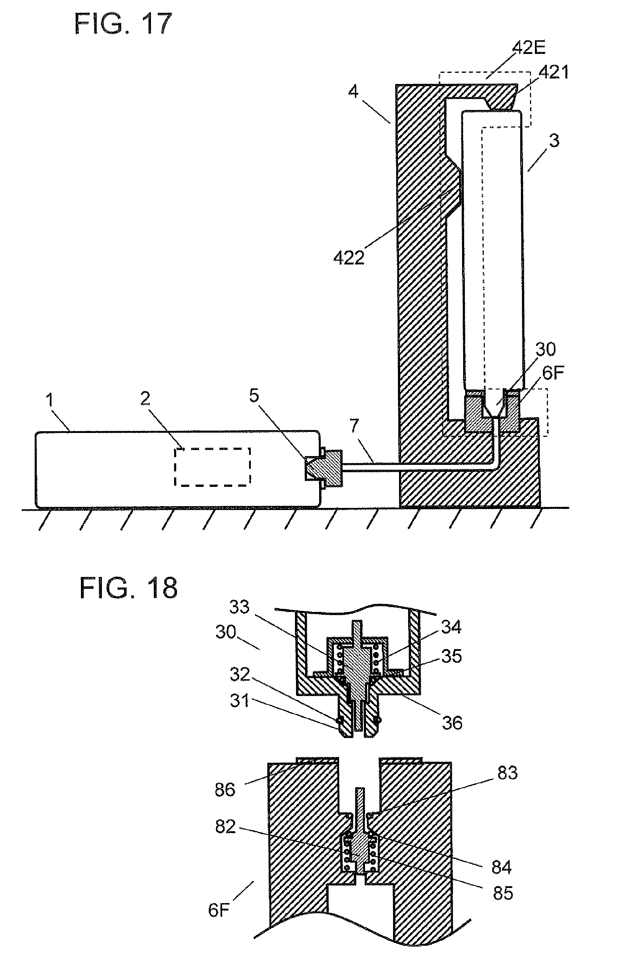

Fig. 17 is a schematic sectional view showing a state in which electronic apparatus 1 and fuel cartridge 3 are connected to a fuel supply device in accordance with a ninth exemplary embodiment of the present invention. The ninth exemplary embodiment is different from the first exemplary embodiment in that holder 4 has cartridge holder part 42E instead of cartridge holder part 42.

A connector part of fuel cartridge 3 and connector part 30 of electronic apparatus 1 have structures in which fuel does not leak in a state in which they are not connected to each other. In this case, for example, connector part 30 and the connector part of electronic apparatus 1 have a structure in which a valve is closed with the use of the force of a spring. Then, connector part 30 may be directly connected to the connector part of electronic apparatus 1.

However, when these connector parts are small, it is not easy for users with poor eyesight, for example, elderly persons to reliably connect these connector parts against the force of a spring. Furthermore, it is difficult for children and elderly persons to supply fuel to electronic apparatus 1 by pressing fuel cartridge 3 by hand while connecting electronic apparatus 1 and fuel cartridge 3 to each other. In addition, when an excessive force is applied to fuel cartridge 3 in a state in which fuel cartridge 3 is connected to electronic apparatus 1, fuel cartridge 3 and electronic apparatus 1 may be damaged in the vicinity of the connector parts thereof. The ninth to thirteenth exemplary embodiments aim to solve such problems.

Second connector 6F to be connected to fuel cartridge 3 is provided on cartridge holder part 42E. Furthermore, cartridge holder part 42E has supporting part 421 in a position facing second connector 6F. Supporting part 421 presses fuel cartridge 3 with respect to second connector 6F. Furthermore, cartridge holder part 42E has positioning part 422 that is in contact with the side surface of fuel cartridge 3 and positions fuel cartridge 3 with respect to second connector 6F.

Next, a connection structure of connector part 30 of fuel cartridge 3 and second connector 6F is described. Fig. 18 is a sectional view showing structures of second connector 6F and connector part 30 of fuel cartridge 3 in the fuel supply device in accordance with the ninth exemplary embodiment of the present invention. Connector part 30 includes nozzle part 31, O-rings 32 and 35, valve body 33, and spring 34. On the other hand, second connector 6F includes valve body 82, O-rings 83 and 84, and spring 85. Reference plane 86 is formed in the periphery of concave-shaped second connector 6F.

In this configuration, procedure in which connector part 30 and second connector 6F connect to each other is described. Firstly, nozzle part 31 of connector part 30 is inserted into second connector 6F. At this time, O-ring 32 is brought into close contact with the inner wall of second connector part 6F, and sealing is secured between connector part 30 and second connector 6F. When nozzle part 31 continues to be inserted, valve body 82 and valve body 33 are brought into contact with each other at the respective protrusions. Herein, spring 34 is set to be stronger than spring 85. Therefore, valve body 82 is pushed down earlier and the sealing by O-ring 84 is released. That is to say, the valve of second connector part 6F is opened.

When nozzle part 31 continues to be inserted furthermore, the tip of nozzle part 31 is brought into contact with O-ring 83, and thus a top shield is formed by O-ring 83. When nozzle part 31 is further inserted, since valve body 82 reaches lower dead point, valve body 33 is pushed up. As a result, the sealing by O-ring 35 is released. That is to say, the valve of connector 30 is opened. Then, reference plane 86 and reference plane 36 of fuel cartridge 3 are brought into contact with each other. Thus, the operation of inserting nozzle part 31 into second connector part 6F is completed.

As mentioned above, valves of connector part 30 and second connector 6F are opened while connector part 30 and second connector 6F are doubly sealed, and a route for supplying fuel is opened. Thus, connector part 30 and second connector 6F have mechanisms for preventing fuel from leaking to the outside. Furthermore, by securing the accuracy between reference planes 36 and 86 and opening positions of the valve, regardless of the total length of fuel cartridge 3, the above-mentioned valve sequence can be reliably performed even if the insertion length is extremely small. Note here that, although not shown, the connector part of electronic apparatus 1 and first connector 5 have also the same structure.

In a fuel supply device having such a structure, a user inserts fuel cartridge 3 into holder 4 while the user slightly pushes up supporting part 421 provided on holder 4. Then, the user joins connector part 30 of fuel cartridge 3 to second connector 6F, while fuel cartridge 3 is brought into contact with positioning part 422. Furthermore, the user installs fuel cartridge 3 in cartridge holder part 42E so that supporting part 421 presses fuel cartridge 3 with respect to second connector 6F.

In this way, only by fitting fuel cartridge 3 into cartridge holder part 42E, second connector 6F can be connected to fuel cartridge 3. In this state, when first connector 5 is connected to electronic apparatus 1, fuel in fuel cartridge 3 can be sent to the power generation section 2 side. Therefore, electronic apparatus 1 and fuel cartridge 3 can be connected to each other easily. Furthermore, fuel cartridge 3 is not directly linked to electronic apparatus 1, and moreover, fuel cartridge 3 is held by holder 4. Therefore, the possibility that fuel cartridge 3 and electronic apparatus 1 may be damaged in the respective connector parts and the vicinity thereof is reduced.

Furthermore, since supporting part 421 is fixed by pressing fuel cartridge 3, fuel cartridge 3 can be held stably during supply of fuel. Therefore, the user is not required to hold fuel cartridge 3. In addition, in case that the force of a spring for securing sealing between connector part 30 of fuel cartridge 3 and second connector 6F is larger than the self weight of fuel cartridge 3, supporting part 421 presses fuel cartridge 3 so as to support the force of the spring. Therefore, a user is not required to continue to press fuel cartridge 3 with respect to holder 4. Therefore, it becomes easy for children and elderly persons to supply fuel to the electronic apparatus 1 side. That is to say, this fuel supply device is useful because it improves the convenience in a system for supplying fuel to small electronic apparatus 1 via small connectors.

Note here that in Fig. 17, first connector 5 is disposed apart from holder 4 but it may be provided on the side surface at the opposite side to cartridge holder part 42E of holder 4. When first connector 1 is disposed in this location, electronic apparatus 1 can be joined to first connector 5 by sliding electronic apparatus 1 on the floor so as to allow holder 4 to face electronic apparatus 1.

It is preferable that first connector 5 and second connector 6F have shapes that can be joined to each other. When electronic apparatus 1 and fuel cartridge 3 have connector parts that can be directly joined to each other, electronic apparatus 1 and first connector 5, and fuel cartridge 3 and second connector 6F can be joined to each other, respectively. Therefore, first connector 5 and second connector 6F can be joined to each other. Thus, it is possible to prevent another fuel cartridge that has a connector part with a different type and shapes and that is not suitable for electronic apparatus 1 from being wrongly connected.

In Fig. 17, first connector 5 has a convex shape and second connector 6F has a concave shape. However, when the connector parts of electronic apparatus 1 and fuel cartridge 3 have a convex shape and a concave shape respectively, accordingly first connector 5 may have a concave shape and second connector 6 may have a convex shape. That is to say, they may have either shape as long as they can be joined to electronic apparatus 1 and fuel cartridge 3, respectively.

In particular, it is preferable that diameter of second connector 6F is smaller than the length of fuel cartridge 3 in the thickness direction. In this configuration, when a connector part is provided on the position whose width is the narrowest on the top surface of fuel cartridge 3 in this way, the effect of facilitating the connection with respect to electronic apparatus 1 can be exhibited.

### (TENTH EXEMPLARY EMBODIMENT)

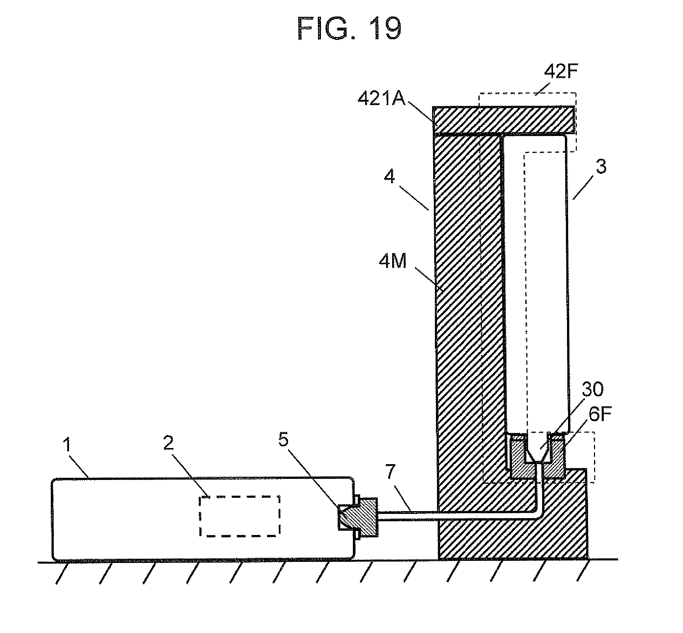

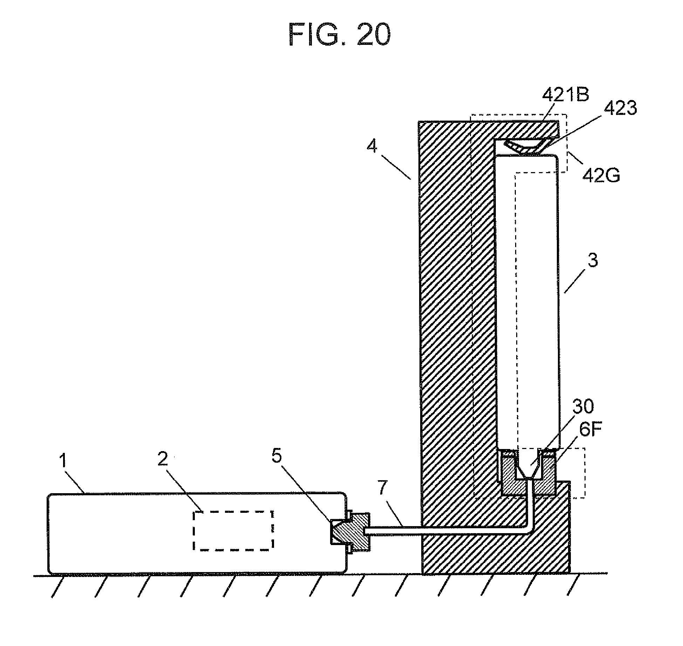

Figs. 19 and 20 are schematic sectional views showing a state in which electronic apparatus 1 and fuel cartridge 3 are connected to a fuel supply device in accordance with a tenth exemplary embodiment of the present invention. This exemplary embodiment is different from the ninth exemplary embodiment in the configuration of holder 4. That is to say, supporting part 421 in Fig. 17 is deformed so that it is pushed up when fuel cartridge 3 is installed in holder 4. However, the configuration of supporting part 421 is not necessarily limited to this configuration.

Holder 4 in Fig. 19 has cartridge holder part 42F on which fuel cartridge 3 is mounted. Second connector 6F is provided at cartridge holder part 42F. Cartridge holder part 42F has supporting part 421A in a position facing second connector 6F. Supporting part 421A presses fuel cartridge 3 with respect to second connector 6F. Supporting part 421A is provided on the upper part of main body part 4M such that it is slidable with respect to main body part 4M.

When fuel cartridge 3 is installed on the thus configured holder 4, firstly, the upside of second connector 6F is opened by sliding supporting part 421A. Then, fuel cartridge 3 is inserted from the upside along main body part 4M, and connector part 30 is joined to first connector 5. Then, supporting part 421A is returned to the position shown in Fig. 19 by sliding so as to press fuel cartridge 3 with respect to second connector 6F. Also when holder 4 having such a structure is used, the same effect as that in the ninth exemplary embodiment can be obtained.

Furthermore, holder 4 in Fig. 20 has cartridge holder part 42G on which fuel cartridge 3 is to be mounted. Second connector 6F is provided at cartridge holder part 42G. Cartridge holder part 42G has supporting part 421B in the position facing second connector 6F. Supporting part 421B presses the cartridge with respect to second connector 6F. Supporting part 421B has flat spring part 423 as an elastic member.

When fuel cartridge 3 is installed on the thus configured holder 4, fuel cartridge 3 is fitted into cartridge holder part 42G by deforming flat spring part 423. Thus, connector part 30 is joined to second connector 6F. Herein, flat spring part 423 is set to be stronger than spring 34. After fuel cartridge 3 is installed, flat spring part 423 presses fuel cartridge 3 with respect to second connector 6F. Also when holder 4 having such a structure is used, the same effect as that in the ninth exemplary embodiment can be obtained. Furthermore, flat spring part 423 holds fuel cartridge 3 so that fuel cartridge 3 is movable in the vertical direction with respect to holder 4.

It is necessary to connect only fuel cartridge 3 that is a type suitable for electronic apparatus 1 and not to connect a wrong type fuel cartridge to electronic apparatus 1. In order to do so, mechanical keys may be formed on the connector of electronic apparatus 1 and connector part 30 of fuel cartridge 3.

The type of fuel cartridge 3 includes kinds and concentrations of fuels, the presence of an internal pressure for sending fuel, and the like. When fuel that is not suitable for power generation section 2 of electronic apparatus 1 is used, the possibility that the performance of the fuel cell of power generation section 2 may be degraded is high.

For such fuel cartridge 3, it is necessary to form a mechanical key also on second connector 6F. At this time, unless the mechanical key of connector part 30 of fuel cartridge 3 and that of second connector 6F match to each other, both are not joined to each other. In such a case, if fuel cartridge 3 is forcedly inserted into cartridge holder part 42G so as to join connector part 30 and second connector 6F to each other, connector part 30, second connector 6F, or holder 4 may be damaged. However, in this exemplary embodiment, flat spring part 423 as an elastic member holds fuel cartridge 3 so that fuel cartridge 3 is movable in the vertical direction with respect to holder 4. Consequently, the above-mentioned damage can be prevented. Note here that instead of flat spring part 423, other elastic members such as rubber may be used.

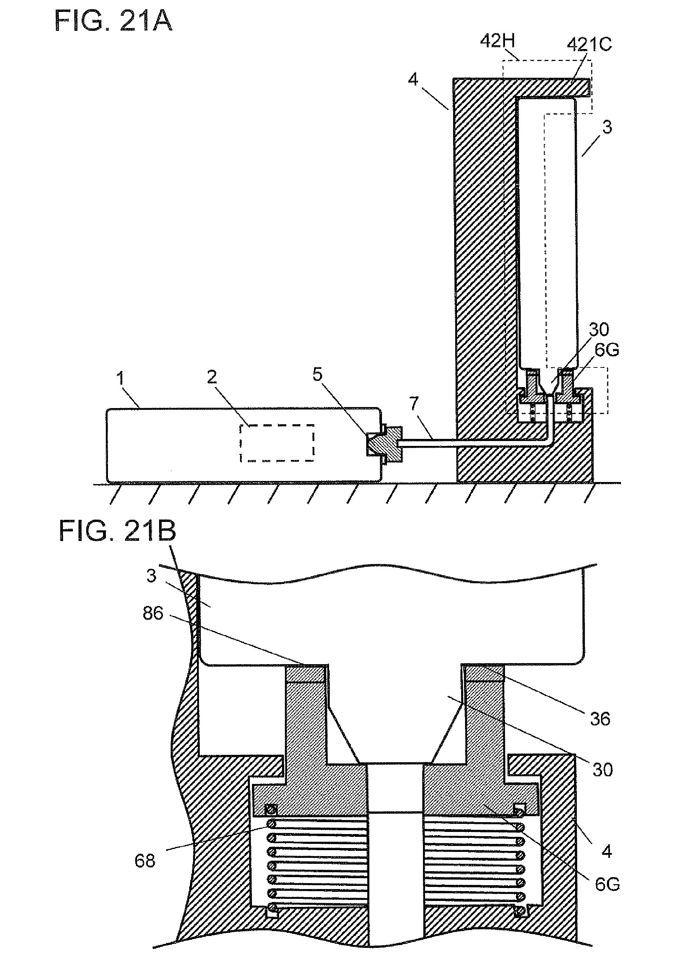

Furthermore, holder 4 shown in Figs. 21A and 21B may be used. Fig. 21A is a schematic sectional view showing a state in which electronic apparatus 1 and fuel cartridge 3 are connected to a fuel supply device using further different holder 4 in accordance with the tenth exemplary embodiment of the present invention; and Fig. 21B is a sectional view showing a principal part thereof. However, detailed structures as shown in Fig. 18 are omitted.

Holder 4 shown in Figs. 21A and 21B has spring 68 as an elastic member on cartridge holder part 42H. Spring 68 is set to be stronger than spring 34 and allows second connector 6G to be movable in the vertical direction with respect to holder 4. Also in this configuration, the same effect as that in the configuration shown in Fig. 20 is obtained. In this configuration, supporting part 421C supports the force of spring 68. Note here that instead of spring 68, other elastic members such as rubber may be used.

Note here that the pressing force of spring 68 needs to be larger than the pressing force of springs 34 and 85 shown in Fig. 18. In other words, when the pressing force of spring 68 is small, second connector 6G retracts without opening the valve mechanism. Therefore, it is possible to prevent the situation that fuel cannot be supplied in advance.

Furthermore, It is preferable that second connector 6G has reference plane 86 and second connector 6G is connected to connector part 30 in a state in which reference plane 86 is brought into contact with reference plane 36 of fuel cartridge 3. Thus, second connector 6G can be connected to connector part 30 in which allowable dimensional tolerance is stipulated more strictly (for example, ± 0.1 mm) than fuel cartridge 3. Therefore, regardless of large allowable dimensional tolerance (for example, ± 1.5 mm) of fuel cartridge 3, a sealing property between connectors can be secured. Thus, connection in which valve body 33 is reliably opened can be achieved. This can be easily achieved by a structure in which second connector 6G is supported by spring 68.

### (ELEVENTH EXEMPLARY EMBODIMENT)

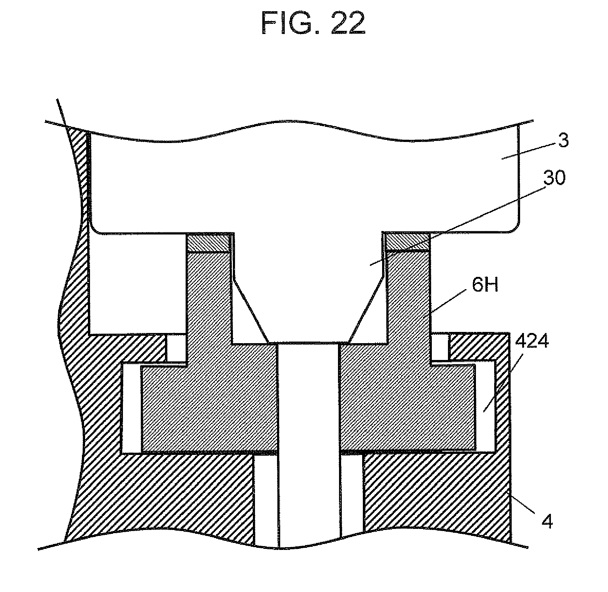

Fig. 22 is a sectional view showing a principal part of holder 4 of a fuel supply device in accordance with an eleventh exemplary embodiment of the present invention. However, detailed structures as shown in Fig. 18 are omitted.

This exemplary embodiment is different from the ninth exemplary embodiment in that second connector 6H is provided at cartridge holder part 42J with allowance 424 included between second connector 6H and holder 4. When second connector 6H has allowance 424 between second connector 6H and holder 4 in this way, excessive force in the horizontal direction is not applied to these parts when second connector 6H is guided into connector part 30, and therefore damage can be prevented.

### (TWELFTH EXEMPLARY EMBODIMENT)

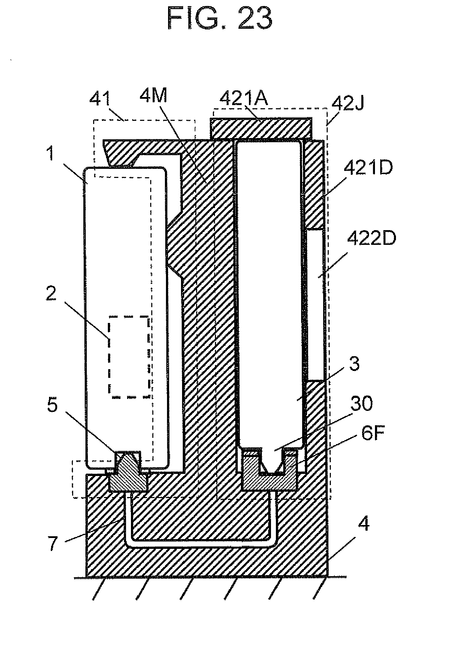

Fig. 23 is a schematic sectional view showing a state in which electronic apparatus 1 and fuel cartridge 3 are connected to a fuel supply device in accordance with a twelfth exemplary embodiment of the present invention. This exemplary embodiment is different from Fig. 19 of the tenth exemplary embodiment in that holder 4 further includes apparatus holder part 41 capable of holding electronic apparatus 1 and first connector 5 is provided at apparatus holder part 41. Furthermore, cartridge holder part 42J has wall part 421D provided with opening 422D in addition to supporting part 421A. That is to say, cartridge holder part 42J has a cylindrical shape, and fuel cartridge 3 is inserted into a portion between wall part 421D and main body part 4M from the top opening. Furthermore, opening 422D is provided on the side surface. The other configurations are the same as those in the tenth exemplary embodiment.

Thus, since holder 4 can hold also electronic apparatus 1, only by setting both electronic apparatus 1 and fuel cartridge 3 on holder 4, both can be easily connected to each other. In particular, only by inserting fuel cartridge 3 filled with fuel and having a large self weight from the top opening, fuel cartridge 3 can be easily held by cartridge holder part 42J and connected to second connector 6F. Furthermore, since opening 422D is provided on the side surface of holder 4, fuel cartridge 3 can be pressed from the outside.

One type of fuel cartridge 3 employs a method of sending fuel inside by being pressurized from outside. In order to send fuel to the electronic apparatus 1 side by using this type of fuel cartridge 3, it is preferable that cartridge holder part 42J holds fuel cartridge 3 in a state in which fuel cartridge 3 is capable of being pressed from the outside.

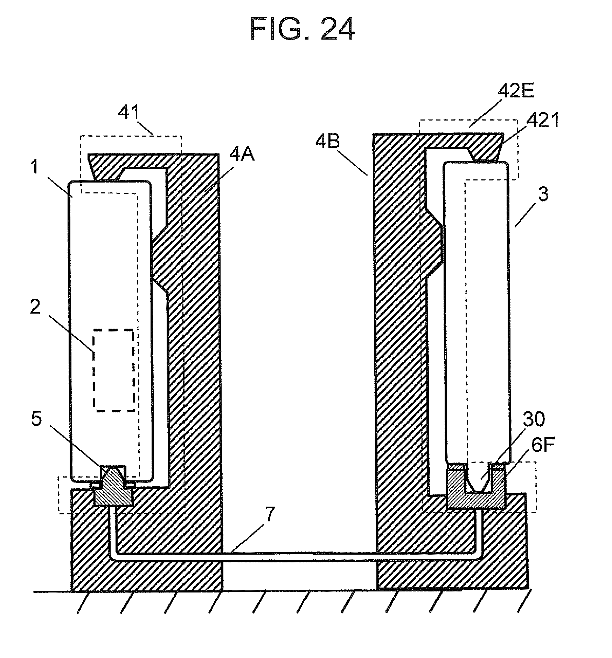

Fig. 24 is a schematic sectional view showing a state in which electronic apparatus 1 and fuel cartridge 3 are connected to another fuel supply device in accordance with this exemplary embodiment. The fuel supply device shown in Fig. 24 is different from the fuel supply device in accordance with the ninth exemplary embodiment shown in Fig. 17 in that holder 4 is divided into first holder 4A and second holder 4B. Apparatus holder part 41 is provided on first holder 4A, and cartridge holder part 42E is provided on second holder 4B. Also when the thus divided first holder 4A and second holder 4B are used and electronic apparatus 1 and fuel cartridge 3 are mounted on first holder 4A and second holder 4B respectively, the same effect as the configuration shown in Fig. 23 can be obtained.

### (THIRTEENTH EXEMPLARY EMBODIMENT)

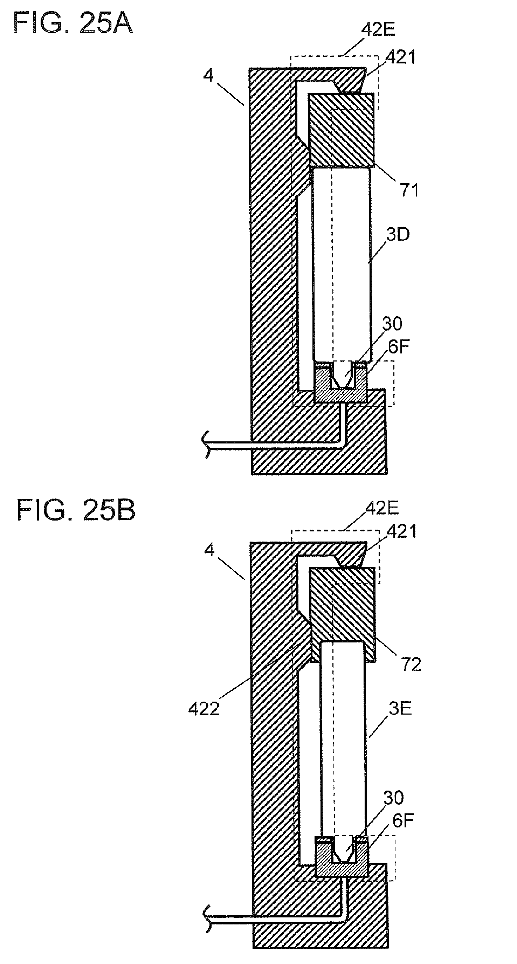

Figs. 25A and 25B are schematic sectional views showing a state in which a fuel cartridge is connected to a fuel supply device in accordance with a thirteenth exemplary embodiment. This exemplary embodiment is different from the ninth exemplary embodiment in that fuel cartridges 3D and 3E that are second fuel cartridges each having a different external shape from that of fuel cartridge 3 are installed. For installation, holding members 71 and 72 are provided. Holding members 71 and 72 corresponds to fuel cartridges 3D and 3E, respectively, and are detachable with respect to fuel cartridges 3D and 3E and cartridge holder part 42E.

In an example shown in Fig. 25A, the total length when holding member 71 is installed on fuel cartridge 3D whose length is shorter than that of fuel cartridge 3 corresponds to the length from second connector 6F to supporting part 421. Thus, fuel cartridge 3D to which holding member 71 is attached can be installed on cartridge holder part 42E.

On the other hand, in an example shown in Fig. 25B, holding member 72 is installed on fuel cartridge 3E whose length and thickness are shorter than those of fuel cartridge 3. The total length in a state in which holding member 72 is installed on fuel cartridge 3E corresponds to the length from second connector 6F to supporting part 421, and holding member 72 is brought into contact with positioning part 422, thereby connector part 30 of fuel cartridge 3E can be appropriately inserted into second connector 6F. Thus, fuel cartridge 3E to which holding member 72 is attached can be installed on cartridge holder part 42E.

Thus, fuel cartridges 3D and 3E each having a different external shape from that of fuel cartridge 3 can be installed on holder 4 by using holding members 71 and 72. Therefore, versatility of the fuel supply device is improved.

Structures peculiar to the above-mentioned exemplary embodiments may be combined with each other. Note here that the first to thirteenth exemplary embodiments are described assuming that a liquid fuel is used. However, the present invention can be applied to a case where a gas fuel such as butane and hydrogen is used.

### INDUSTRIAL APPLICABILITY

A fuel supply device of the present invention facilitates joining (connection) between a fuel cartridge and an electronic apparatus. Therefore, it becomes easy to supply fuel to an electronic apparatus. This fuel supply device is useful because it improves the convenience in a system in which fuel is supplied to a small electronic apparatus via small connectors.

## Claims

1. A fuel supply device for connecting an apparatus including at least a part of a power generation section formed of a fuel cell and a fuel cartridge to each other so as to send fuel in the fuel cartridge to the power generation section, the fuel supply device comprising:
a holder having a cartridge holder part on which the fuel cartridge is to be mounted;
a first connector to be connected to the apparatus;
a second connector provided at the cartridge holder part and to be connected to the fuel cartridge; and
a connection pipe connecting the first connector with the second connector.

2. The fuel supply device according to claim 1,
wherein the first connector and the second connector have shapes capable of being joined to each other.

3. The fuel supply device according to claim 2,
wherein the first connector and the second connector form a pair of mechanical keys having special shapes capable of being joined to each other.

4. The fuel supply device according to claim 3,
wherein the second connector is rotatable with respect to the holder.

5. The fuel supply device according to claim 4,
wherein the second connector has an operation part configured to rotate the second connector, the operation part protruding from the holder.

6. The fuel supply device according to claim 1,
wherein the cartridge holder part is configured to hold the fuel cartridge in a state in which the fuel cartridge is capable of being pressed from outside.

7. The fuel supply device according to claim 1,
wherein the holder includes an elastic member so as to movably hold the second connector in the cartridge holder part.

8. The fuel supply device according to claim 7,
wherein the elastic member is capable of deforming so as to retract the second connector in a case that a shape of the second connector is different from a shape of a connector part of the fuel cartridge.

9. The fuel supply device according to claim 7,
wherein the first connector and the second connector form a pair of mechanical keys having special shapes capable of being joined to each other.

10. The fuel supply device according to claim 9,
wherein a pressing force of the elastic member is set smaller than rigidity of the mechanical keys.

11. The fuel supply device according to claim 7,
wherein the second connector has a distinguishing mark for determining whether or not the fuel cartridge is connected to the second connector properly, and an opening part is provided in a position corresponding to the distinguishing mark in the holder.

12. The fuel supply device according to claim 7,
wherein a movable range of the elastic member is longer than a height of a connector part of the fuel cartridge.

13. The fuel supply device according to claim 7,
wherein a pressing force of the elastic member is larger than a pressing force of a connector part of the fuel cartridge.

14. The fuel supply device according to claim 7, further comprising a holding member corresponding to a second fuel cartridge having a different external shape from an external shape of the fuel cartridge and being detachable with respect to the second fuel cartridge and the cartridge holder part,
wherein the second fuel cartridge to which the holding member is attached is capable of being installed to the cartridge holder part.

15. The fuel supply device according to claim 7,
wherein the fuel cartridge is connected to the second connector in a state in which a reference plane provided on the fuel cartridge and the second connector are brought into contact with each other.

16. The fuel supply device according to claim 1,
wherein the cartridge holder part has a supporting part configured to press the fuel cartridge with respect to the second connector in a position facing the second connector.

17. The fuel supply device according to claim 16,
wherein the second connector is provided at the cartridge holder part with allowance between the second connector and the holder.

18. The fuel supply device according to claim 16,
wherein the supporting part has an elastic member.

19. The fuel supply device according to claim 16, further comprising a holding member corresponding to a second fuel cartridge having a different external shape from an external shape of the fuel cartridge, and being detachable with respect to the second fuel cartridge and the cartridge holder part,
wherein a total length when the holding member is attached to the second fuel cartridge corresponds to a length from the second connector to the supporting part, and the second fuel cartridge to which the holding member is attached is capable of being installed on the cartridge holder part.

20. The fuel supply device according to claim 1,
wherein the holder further includes an apparatus holder part capable of holding the apparatus, and the first connector is provided on the apparatus holder part.

21. The fuel supply device according to claim 1,
wherein the holder includes a first holder having an apparatus holder part capable of holding the apparatus, and a second holder having the cartridge holder part, and
the first connector is provided on the apparatus holder part.

22. The fuel supply device according to claim 1,
wherein the first connector has a diameter smaller than a length in a thickness direction of the apparatus.
